# EUROPÄISCHE PATENTSCHRIFT

(11) **EP 2 103 643 B1**
(45) Veröffentlichungstag und Bekanntmachung des Hinweises auf die Patenterteilung: **02.05.2012**
(21) Anmeldenummer: 09153846.2
(22) Anmeldetag: 27.02.2009
(51) Int. Cl.: C08J 3/14, B29C 67/00, C08G 69/02, C08G 69/08, C08G 69/26, C08G 69/14, C08G 69/36

(54) **Copolyamidpulver und dessen Herstellung, Verwendung von Copolyamidpulver in einem formgebenden Verfahren und Formkörper, hergestellt aus diesem Copolyamidpulver**
Copolyamide powder and its production, its use in a moulding method and object made of this copolyamide powder
Poudre copolyamide et sa fabrication, utilisation de ladite poudre dans un procédé de mise en forme et objet fabriqué à partir de cette poudre copolyamide

(30) Priorität: 19.03.2008 DE 102008000755
(43) Veröffentlichungstag der Anmeldung: 23.09.2009
(73) Patentinhaber: Evonik Degussa GmbH, 45128 Essen (DE)
(72) Erfinder: Monsheimer Sylvia, 45721 Haltern am See (DE); Grebe Maik, 44805 Bochum (DE); Altkemper Stefan, 46282 Dorsten (DE); Hessel-Geldmann Sigrid, 45721 Haltern am See (DE); Baumann Franz-Erich, 48249 Dülmen (DE); Warnke Kristiane, 45665 Recklinghausen (DE); Stemmer Heike, 45721 Haltern am See (DE); Mügge Joachim, 45721 Haltern am See (DE); Türke Michael, 45770 Marl (DE); Simon Ulrich, 44625 Herne (DE)

(56) Entgegenhaltungen:
- DE-A1-102004 010 160
- DE-A1-102004 020 453
- US-A- 4 386 197
- US-A- 5 648 450
- US-A- 6 149 836
- US-B1- 6 245 281
- SCHMACHTENBERG E ET AL: "LASERSINTERN VON POLYAMID. LASER-SINTERING OF POLYAMIDE" KUNSTSTOFFE, CARL HANSER VERLAG, MUNCHEN, DE, Bd. 87, Nr. 6, 1. Juni 1997 (1997-06-01), Seite 773/774,776, XP000656866 ISSN: 0023-5563

## Beschreibung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Erfindung betrifft die Verwendung eines Copolyamidpulvers, welches unter Verwendung der Monomerbausteine
➢ Laurinlactam oder ω-Aminoundecansäure, und entweder
➢ Dodekandisäure oder Sebazinsäure und entweder
➢ Dekandiamin oder Dodekandiamin
hergestellt wurde, in einem schichtweise arbeitenden Verfahren, mit welchem selektiv Bereiche einer Pulverschicht aufgeschmolzen werden, unter Verwendung eben dieses Pulvers. Nach Abkühlen und Verfestigen der zuvor Schicht für Schicht aufgeschmolzenen Bereiche kann der Formkörper dem Pulverbett entnommen werden.

Die Selektivität der schichtweise arbeitenden Verfahren kann dabei beispielsweise über den Auftrag von Suszeptoren, Absorbern, Inhibitoren oder durch Masken oder über fokussierte Energieeinbringung, wie beispielsweise durch einen Laserstrahl, oder über Glasfasern erfolgen. Der Energieeintrag wird über elektromagnetische Strahlung erreicht.

Im Folgenden werden einige Verfahren beschrieben, mit denen bei der erfindungsgemäßen Verwendung des Copolyamidpulvers erfindungsgemäße Formteile hergestellt werden können, ohne dass die Erfindung darauf beschränkt werden soll.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die PulverPartikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6 136 948 und WO 96/06881 (beide DTM Corporation) beschrieben. Eine Vielzahl von Polymeren und Copolymeren wird für diese Anwendung beansprucht, wie z. B. Polyacetat, Polypropylen, Polyethylen, Ionomere und Polyamid.

Andere gut geeignete Verfahren sind das SIV-Verfahren, wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamid, oder Gemische davon eingesetzt werden.

In WO 95/11006 wird ein für das Lasersintern geeignetes Polymerpulver beschrieben, das bei der Bestimmung des Schmelzverhaltens durch Differential Scanning Calorimetry bei einer Scanning rate von 10 bis 20 °C/min keine Überlappung des Schmelze- und Rekristallisationspeaks zeigt, einen ebenfalls durch DSC bestimmten Kristallinitätsgrad von 10 bis 90 % aufweist, ein zahlenmäßiges Mittel des Molekulargewichts Mn von 30 000 bis 500 000 hat und dessen Quotient Mw/Mn im Bereich von 1 bis 5 liegt.

DE 197 47 309 beschreibt die Verwendung eines Polyamid-12-Pulvers mit erhöhter Schmelztemperatur und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid 12. Ein Vorteil dieser Fällpulver ist die für die Auftragung dünner Schichten günstige Partikelform und die gute Trennung von Schmelze und Pulver in schichtbauenden formgebenden Verfahren.

In EP 03 769 351 wird einkomponentiges Polyamidpulver mit niedriger BET-Oberfläche für den Einsatz im Lasersintern beschrieben. Die niedrige BET-Oberfläche wird dabei durch eine mechanische Nachbearbeitung, beispielsweise in einem schnelllaufenden Mischer, erreicht.

In DE 10 2004 010 160 A1 wird die Verwendung von Polymerpulver mit Copolymer in formgebenden Verfahren beschrieben. Es handelt sich dabei um thermoplastische statistische Copolymere aus den unterschiedlichsten Monomerbausteinen. Für Copolyester werden beispielhaft Monomere genannt, ohne auf spezielle Zusammensetzungen einzugehen. Die Copolymere weisen einen MFR-Wert zwischen 1 und 10 g/10 min auf. Die daraus hergestellten Pulver werden ausschließlich über Kaltmahlung erhalten.

Bei der Verarbeitung von Polymerpulver in einem werkzeuglosen Verfahren besteht die Herausforderung, dass zur Vermeidung des sogenannten Curls die Temperatur in dem Bauraum bzw. Baukammer möglichst gleichmäßig auf einem Niveau knapp unterhalb des Schmelzpunktes des polymeren Werkstoffes gehalten werden muss. Bei amorphen Polymeren ist damit eine Temperatur knapp unterhalb der Glasübergangstemperatur gemeint, bei teilkristallinen Polymeren eine Temperatur knapp unterhalb des Kristallitschmelzpunktes. Mit Curl ist ein Verzug des bereits aufgeschmolzenen Bereiches gemeint, der ein zumindest teilweises Herausragen aus der Bauebene bewirkt. Es besteht damit die Gefahr, dass beim Auftrag der nächsten Pulverschicht, beispielsweise durch einen Rakel oder eine Walze, die herausragenden Bereiche verschoben oder sogar ganz herausgerissen werden. Das hat für den Prozess zur Folge, dass die Bauraumtemperatur insgesamt auf einem relativ hohen Niveau gehalten werden muss, und dass die durch Abkühlen und durch Kristallisation bedingte Volumenänderung der mit solchen Verfahren hergestellten Formkörpern erheblich ist. Nicht zuletzt wird durch den Abkühlprozess eine gerade für die "Rapid"- Verfahren nicht unerhebliche Zeitspanne benötigt.

Eine schwierig zu beherrschende Eigenheit der teilkristallinen Thermoplaste ist in vielen Fällen ihre Kristallinität, bzw. die dadurch verursachte Änderung des Volumens während des Abkühlens aus der Schmelze heraus. Es besteht zwar die Möglichkeit, durch eine sehr aufwendige und genaue Temperaturführung die Volumenänderung durch Kristallinität einer einzelnen Schicht weitgehend zu vergleichsmäßigen, jedoch ist die kristallisationsbedingte Volumenänderung beliebig aufgebauter dreidimensionaler Formkörper über den Formkörper nicht gleichmäßig. Beispielsweise hängt die Ausbildung kristalliner Strukturen von der Abkühlgeschwindigkeit des Formkörpers ab, die an unterschiedlich dicken Stellen oder an verwinkelten Stellen anders ist als an anderen Stellen des Formkörpers. Andererseits wird eine hohe Schmelzenthalpie benötigt, um eine gute Abgrenzung zwischen den aufgeschmolzenen Bereichen und ihrer Umgebung zu ermöglichen, was zur Formtreue des Bauteils entscheidend beiträgt.

Nachteilig hinsichtlich der Prozeßsicherheit an den kommerziell verfügbaren und am meisten verwendeten Homopolyamid Polyamid 12-Pulver ist des weiteren eine relativ hohe BET-Oberfläche im Vergleich zu Mahlpulver oder durch Polymerisation in Lösung erhaltene Pulver. Die hohe BET-Oberfläche führt zu einer verschlechterten Rieselfähigkeit des Pulvers, dem man zwar durch Zugabe einer geeigneten Rieselhilfe begegnen kann, sich dadurch aber Nachteile wie ein verkleinertes Verarbeitungsfenster erkauft, was zu unsicheren Prozessen führt und für Rapid Manufacturing eher kontraproduktiv ist. Die hohe BET-Oberfläche wirkt sich außerdem nachteilig auf den Verzug der Bauteile aus. Durch Vermahlung erhaltene Pulver mit niedriger BET-Oberfläche wie beispielsweise das ebenfalls kommerziell genutzte Polyamid 11 haben scharfkantige Partikel, deren Form ebenfalls nachteilig für die Prozeßsicherheit ist.

Ein Nachteil der amorphen Thermoplaste ist die hohe Viskosität, die nur deutlich oberhalb des Schmelzpunktes bzw. der Glasübergangstemperatur ein Zusammenfließen ermöglicht. Häufig sind mit amorphen Thermoplasten nach obigen Verfahren hergestellte Formkörper daher relativ porös; es werden lediglich Sinterhälse ausgebildet, und die einzelnen Pulverpartikel sind im Formkörper noch erkennbar. Bei Erhöhung des Energieeintrages zur Viskositätsreduzierung kommt jedoch das Problem der Formtreue hinzu; beispielsweise durch Wärmeleitung von den aufzuschmelzenden in die umliegenden Bereiche werden die Konturen des Formkörpers unscharf.

Aus diesem Grunde besteht ein Bedarf an einer präzise einstellbaren Mischung der für amorphe und teilkristalline Polymeren typischen Eigenschaften, welche oben eingehend beschrieben wurden. Leider erfüllen Copolymere nach dem Stand der Technik diese Anforderungen nicht.

Nachteilig an den bisher in der Literatur beschriebenen Copolymeren, insbesondere Copolyamiden für die Verwendung in werkzeuglosen formgebenden Verfahren ist, daß durch die Zusammensetzung zwar eine Absenkung der Schmelzpunkte erreicht werden kann, was sich erleichternd auf die Verarbeitbarkeit auswirkt und auf den Schwund, und zwar durch Verwendung von zumindest einem aromatischen Monomerbaustein. Verursacht wird das durch eine verringerte Kristallinität, so daß nicht mehr der Kristallitschmelzpunkt den Übergang von fest nach flüssig beschreibt, sondern mehr und mehr der Glasübergang, wobei der Übergang fließend ist und von den Zusammensetzungen der Copolymere abhängt. Der aromatische Monomerbaustein kann beispielsweise Terephthalsäure oder Isophthalsäure sein. Im Gegenzug wird aber die Viskosität der Schmelze durch diese aromatischen Komponenten stark erhöht, was das Zusammenfließen der Pulverpartikel erschwert. Es muß also immer ein Kompromiß zwischen konkurrierenden Zieleigenschaften gefunden werden. Desweiteren ist Pulver aus den üblichen Copolymeren nicht fällbar und muß daher durch andere Verfahren wie beispielsweise Kaltmahlung erhalten werden. Dabei erhält man aber scharfkantige Partikel, die sich im Verarbeitungsprozeß nachteilig auswirken.

Aufgabe der vorliegenden Erfindung war es deshalb, die Verwendung eines Polymerpulvers in formgebenden werkzeuglosen Verfahren zu ermöglichen, welches die widersprüchlichen Eigenschaften niedrige BET-Oberfläche, runde Kornform und niedrige Viskosität knapp oberhalb des Kristallitschmelzpunktes vereinbart, und gleichzeitig eine hohe Schmelzenthalpie aufweist. Das Verarbeitungsverfahren ist dabei ein schichtweise arbeitendes Verfahren, bei dem selektiv Bereiche der jeweiligen Pulverschicht mittels elektromagnetischer Energie aufgeschmolzen werden und sich nach dem Abkühlen zu dem gewünschten Formkörper verbunden haben.

Überraschenderweise wurde nun gefunden, wie in den Ansprüchen beschrieben, dass sich durch die Verwendung von speziellem Copolyamidpulver, welches unter Verwendung der Monomerbausteine
➢ Laurinlactam oder ω-Aminoundecansäure, und entweder
➢ Dodekandisäure oder Sebazinsäure und entweder
➢ Dekandiamin oder Dodekandiamin
hergestellt wurde, in einem schichtweise arbeitenden Verfahren, bei welchem selektiv Bereiche der jeweiligen Pulverschicht aufgeschmolzen werden, trotz Verarbeitung bei niedrigen Temperaturen in der Baukammer eine sehr niedrige Viskosität des Polymeren ausgenutzt werden kann und die Formtreue der daraus hergestellten Formteile gut ist. Das schlägt sich nieder in hohen Bauteildichten, und gleichzeitig einfacher Verarbeitbarkeit und geringem Schwund. Die Prozeßsicherheit ist dabei außerordentlich hoch.

Gegenstand der vorliegenden Erfindung ist daher die Verwendung von speziellem Copolyamidpulver in einem werkzeuglosen formgebenden Verfahren, welches schichtweise arbeitet, und bei welchem selektiv Bereiche der jeweiligen Schicht aufgeschmolzen werden, welche dadurch gekennzeichnet ist, daß das Pulver zumindest ein Copolyamid aufweist, welches unter Verwendung der Monomerbausteine
➢ Laurinlactam oder ω-Aminoundecansäure, und entweder
➢ Dodekandisäure oder Sebazinsäure und entweder
➢ Dekandiamin oder Dodekandiamin
hergestellt wurde.

Bevorzugt wird als Monomerbaustein für die Copolyamidkomponente in der erfindungsgemäßen Verwendung 50 bis 98 Teile Laurinlactam oder ω-Aminoundecansäure eingesetzt, besonders bevorzugt 75 bis 98 Teile, und ganz besonders bevorzugt 85 bis 98 Teile.

Bevorzugt werden die Monomerbausteine Disäure und Diamin in der Copolyamidkomponente zu gleichen Teilen eingesetzt. Insgesamt beträgt der Anteil der beiden letztgenannten Monomerbausteinen zusammen zwischen 2 und 50 Teilen der Copolyamidkomponente der Pulverkomposition.

Bevorzugt wird als Monomerbaustein für die Copolyamidkomponente in der erfindungsgemäßen Verwendung 50 bis 98 Teile Laurinlactam oder ω-Aminoundecansäure eingesetzt, besonders bevorzugt 75 bis 98 Teile, und ganz besonders bevorzugt 85 bis 98 Teile.

Bevorzugt werden die Monomerbausteine Disäure und Diamin in der Copolyamidkomponente zu gleichen Teilen eingesetzt. Insgesamt beträgt der Anteil der beiden letztgenannten Monomerbausteinen zusammen zwischen 2 und 50 Teilen der Copolyamidkomponente der Pulverkomposition.

Das Copolyamidpulver sowie dessen erfindungsgemäße Verwendung wird nachfolgend beschrieben, ohne dass die Erfindung darauf beschränkt sein soll.

Die Verwendung des speziellen Copolyamids im erfindungsgemäßen Verfahren findet überraschend eine Lücke zwischen den oben dargestellten konkurrierenden Eigenschaften. Copolyamide (Hotmelts) werden in der Regel aus zumindest einem aromatischen Monomerbaustein hergestellt und sind damit schwer fließfähig und auch nicht hochkristallin. Die Verwendung von einem
➢ Laurinlactam oder ω-Aminoundecansäure, und entweder
➢ Dodekandisäure oder Sebazinsäure und entweder
➢ Dekandiamin oder Dodekandiamin
in der Polykondensation führt zu einem Copolyamid mit sehr speziellen Eigenschaften. Nach der Nomenklatur gemäß ISO 1874 handelt es sich dabei um Copolyamide mit der Bezeichnung PA12/1012, PA12/1212, PA11/1012, PA11/1212, PA11/1010, PA12/1010, PA11/1210, PA12/1210, je nach Zusammensetzung der Monomerbausteine. Das durch Polykondensation erhaltene Copolyamid ist statistisch aufgebaut.

Ein Schmelzpunkt unterhalb der für Polyamid 12 typischen 176 °C bzw. unterhalb der für Polyamid 11 typischen 186 °C je nach Einsatzkomponente und gleichzeitig eine hohe Kristallinität des Copolyamids ist eine ungewöhnliche Eigenschaftskombination, die sich überraschend positiv auf den erfindungsgemäßen Prozeß auswirkt. Ein unerwarteter Vorteil besteht darin, dass sich aus den beschriebenen Copolyamiden feinteiliges Pulver durch einen Fällprozeß erhalten lässt.

Bei dem Fällprozeß wird das spezielle Copolyamid in einem Lösemittel, bevorzugt ein Alkohol mit ein bis drei C-Atomen, vorzugsweise Ethanol, und erhöhter Temperatur, und unter Druck gelöst und anschließend durch gezieltes Abkühlen der Lösung ausgefällt. Das Abkühlen kann dabei gleichmäßig, oder in Stufen und verschiedenen Geschwindigkeiten erfolgen. Der Fachmann kann die geeigneten Bedingungen leicht in Versuchen ermitteln. Geeignete Fällprozesse sind beispielsweise in EP 863174 und in DE 2906 647 beschrieben, wobei die Vorgehensweise dadurch nicht eingeschränkt werden soll.

Der Begriff Copolyamidpulver sei in dieser Beschreibung derart zu verstehen, dass das Pulver ein spezielles Copolyamid aufweist, aber auch andere Komponenten wie Füll-oder Hilfsstoffe oder andere Polymere zusätzlich in dem Pulver enthalten sein können.

Das durch die Fällung erhaltene spezielle Copolyamidpulver zeichnet sich dadurch aus, dass mit dem Fällverfahren eine enge, feine Kornverteilung eingestellt werden kann, ebenso wie eine im wesentlichen kartoffelförmige bzw. runde Partikelform, und einen Schmelzpunkt (Kristallisationsschmelzpunkt) zwischen 170 und 184 °C, bevorzugt zwischen 175 und 184 °C, falls Laurinlactam verwendet wurde, und einen Schmelzpunkt zwischen 180 und 193 °C, bevorzugt zwischen 185 und 193 °C, falls ω-Aminoundecansäure verwendet wurde.

Die Schmelzenthalpie des speziellen Copolyamidpulvers ist bevorzugt größer als 90 J/g, besonders bevorzugt größer als 95 J/g, und ganz besonders bevorzugt größer als 100 J/g. Diese Schmelzenthalpien werden gleichzeitig mit einer runden Kornform und einer BET-Oberfläche von weniger als 8m²/g durch den Fällprozeß eingestellt und stellen damit eine einzigartige Eigenschaftskombination her, die vorteilhaft in den formgebenden Verfahren wie beschrieben, eingesetzt werden können.

Die verschiedenen Parameter wurden mittels DSC (Differential Scanning Calorimetry) nach DIN 53765 bzw. nach AN-SAA 0663 bestimmt. Die Messungen wurden mit einem Perkin Elmer DSC 7 mit Stickstoff als Spülgas und einer Aufheizrate sowie Abkühlrate von 20 K/min durchgeführt. Der Messbereich betrug -90 bis +250 °C.

Die BET-Oberfläche des so erhaltenen Pulvers liegt typischerweise zwischen 1 und 8 m²/g, bevorzugt zwischen 1 und 5 m²/g, und ganz besonders bevorzugt zwischen 1 und 3 m²/g. Der mittlere Korndurchmesser beträgt bevorzugt zwischen 30 und 70 µm, bevorzugt zwischen 32 und 60 µm, und besonders bevorzugt zwischen 35 und 50 µm. Die Schüttdichte liegt typischerweise - ohne Zugabe einer Rieselhilfe - zwischen 300 und 600 g/l.

Die Lösungsviskosität in 0,5%iger Kresollösung nach DIN 53727 beträgt bei den erfindungsgemäßen Polyamidpulvern bevorzugt 1,4 bis 2,3 , besonders bevorzugt 1,5 bis 2,1, und ganz besonders bevorzugt zwischen 1,55 und 1,9. Das Pulver kann auch eine Mischung aus Komponenten mit gezielt unterschiedlicher Viskosität aufweisen. Das Copolyamid kann außerdem ungeregelt, teilgeregelt oder geregelt sein, wobei die für Polyamide nach dem Stand der Technik bekannten Regler verwendet werden können. Das erfindungsgemäße Copolyamid aufweisende Pulver kann auch zwei oder mehr unterschiedlich geregelte Komponenten aufweisen sowie weitere Füll- und Hilfsstoffe.

Die erfindungsgemäße Verwendung des speziellen Copolyamide aufweisenden Pulvers führt überraschend zu guten Prozeßeigenschaften und auch Bauteileigenschaften. Der oben beschriebene Kompromiß zwischen verschiedenen Zieleigenschaften wird umgangen, und man befindet sich in einem völlig neuen Prozeßbereich mit überraschenden Möglichkeiten, die im folgenden erläutert werden sollen.

Die Viskosität ist so niedrig, daß sich ein sehr glatter Schmelzefilm in der Baukammer bei moderater Vorheizung bis knapp unter den Schmelzpunkt einstellt. Der gute Schmelzeverlauf führt zu Formkörpern, die in der Dichte nah an die Dichte von aus entsprechendem Material spritzgegossenen Bauteilen liegen. Die Kristallinität führt zu einer guten Abgrenzung zwischen den durch den selektiven Energieeintrag aufgeschmolzenen und den nicht aufgeschmolzenen Bereichen. Der Energieeintrag kann so auf den notwendigen Schmelzeverlauf abgestimmt werden, daß kein unerwünschtes "Wachsen" der Formkörper außerhalb der Sollkontur beispielsweise durch Wärmeleitung auftritt. Die Verwendung des Copolyamidpulvers im erfindungsgemäßen Verfahren ist hervorragend und läßt einen automatischen Ablauf ohne weiteres zu.

Die Parameter für eine optimierte Verarbeitung kann der Fachmann leicht herausfinden. Das Copolyamidpulver lässt sich mit größerer Prozeßsicherheit verarbeiten, da das Verarbeitungsfenster überraschenderweise deutlich größer ist als bei den derzeit kommerziell verfügbaren Polyamid 11 oder 12-Pulvern.

Die Recyclingfähigkeit ist gegenüber dem Pulver nach dem Stand der Technik verbessert. Durch den niedrigeren Schmelzpunkt des gefällten Copolyamidpulvers gegenüber gefälltem Polyamid-11 bzw. Polyamid 12-Pulver wird zum einen weniger Energie im Prozeß benötigt, zum anderen werden Probleme wie Schwindung und Formtreue wie oben beschrieben, entschärft. Die zum Aufheizen und Abkühlen benötigte Zeit wird reduziert.

Die erfindungsgemäßen Formkörper, hergestellt nach einem erfindungsgemäßen Verfahren, weisen zudem eine weiße Eigenfarbe auf.

Die Copolyamide werden durch Polykondensation der C11- bzw. C12-Lactame bzw. ω-Aminocarbonsäuren mit den genannten C10 bzw. C12-Diaminen und -Dicarbonsäuren in annähernd äquimolarem Verhältnis nach dem Stand der Technik hergestellt. Ein nicht erfindungsgemäßes Pulver daraus kann nach den nach dem Stand der Technik bekannten Verfahren wie beispielsweise Kaltvermahlung, aber auch andere, erhalten werden. Zur Erhaltung erfindungsgemäßer Pulver werden die speziellen Copolyamide aber gefällt. Die Copolyamid-Granulate werden in heißem Lösemittel, beispielsweise Ethanol, gelöst und anschließend ausgefällt, um pulverförmige Partikel zur Verwendung im erfindungsgemäßen Verfahren zu erhalten. Zumindest eine Schutzsiebung zur Entfernung der sehr groben Partikel sollte anschließend durchgeführt werden. Meist ist eine anschließende Fraktionierung sinnvoll. Bevorzugt liegen die Copolyamidpulver im D50 zwischen 30 und 70 µm, besonders bevorzugt zwischen 32 und 60 µm, und ganz besonders bevorzugt zwischen 35 und 50 µm. Die Kornverteilung ist dabei relativ eng. Typische Werte für das Verhältnis D10/D90 1 : 2 bis 1 : 10, bevorzugt 1 : 2 bis 1 : 5.

Eine mechanische Nachbearbeitung, beispielsweise in einem schnellaufenden Mischer, zur Verrundung der Partikel und Absenkung der spezifischen Oberfläche und damit zur besseren Auftragbarkeit dünnerer Schichten wie in EP 03 769 351 beschrieben, ist bei dem erfindungsgemäßen Copolyamidpulver überflüssig. Die BET-Oberfläche liegt bei dem erfindungsgemäßen Copolyamidpulver zwischen 1 und 8 m²/g, bevorzugt zwischen 1 und 5 m²/g und ganz besonders bevorzugt zwischen 1 und 3 m²/g. Damit wird die vorteilhafte niedrige BET-Oberfläche auch ohne diesen zusätzlichen Produktionsschritt eingestellt.

Das die speziellen Copolyamide aufweisende Pulver zur Verwendung im erfindungsgemäßen Verfahren kann außerdem Hilfsstoffe und/oder Füllstoffe und/oder weitere organische oder anorganische Pigmente aufweisen. Solche Hilfsstoffe können z. B. Rieselhilfsmittel, wie z. B. gefällte und/oder pyrogene Kieselsäuren, sein. Pyrogene Kieselsäuren werden zum Beispiel unter dem Produktnamen Aerosil, mit unterschiedlichen Spezifikationen, durch die Degussa AG angeboten. Vorzugsweise weist Polymerpulver weniger als 3 Gew.-%, vorzugsweise von 0,001 bis 2 Gew.-% und ganz besonders bevorzugt von 0,05 bis 1 Gew.-% solcher Hilfsstoffe, bezogen auf die Summe der vorhandenen Polymere, auf. Die Füllstoffe können z. B. Glas-, Metall- oder Keramikpartikel, wie z. B. Glaskugeln, Stahlkugeln oder Metallgrieß, oder Fremdpigmente, wie z. B. Übergangsmetalloxide, sein. Sie können auch hohl ausgebildet sein. Die Pigmente können beispielsweise Titandioxidpartikel basierend auf Rutil (bevorzugt) oder Anatas sein oder Rußpartikel. Auch die Verwendung von Carbonfasern, auch gemahlen, sei hier erwähnt.

Die Füllstoffpartikel weisen dabei vorzugsweise eine kleinere oder ungefähr gleich große mittlere Partikelgröße wie die Partikel des Copolyamidpulvers auf. Vorzugsweise sollte die mittlere Partikelgröße d₅₀ der Füllstoffe die mittlere Partikelgröße d₅₀ des Copolyamids um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Rapid-Prototyping/Rapid Manufacturing-Anlage.

Vorzugsweise weist das Copolyamidpulver weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe, bezogen auf die Summe der vorhandenen Copolyamide, auf.

Beim Überschreiten der angegebenen Höchstgrenzen für Hilfs- und/oder Füllstoffe kann es je nach eingesetztem Füll- oder Hilfsstoff zu deutlichen Verschlechterungen der mechanischen Eigenschaften von Formkörpern kommen, die mittels solcher Pulver hergestellt wurden.

Es ist ebenso möglich, herkömmliche Polymerpulver mit dem erfindungsgemäßen Copolyamidpulver zu mischen. Auf diese Weise lassen sich Pulver mit einer weiteren Kombination von Oberflächeneigenschaften herstellen. Das Verfahren zur Herstellung solcher Mischungen kann z. B. DE 34 41 708 entnommen werden.

Zur Verbesserung des Schmelzeverlaufs bei der Herstellung der Formkörper kann ein Verlaufsmittel, wie beispielsweise Metallseifen, bevorzugt Alkali- oder Erdalkalisalze der zugrunde liegenden Alkanmonocarbonsäuren oder Dimersäuren, dem Pulver zugesetzt werden. Die Metallseifenpartikel können in die Copolymerpartikel eingearbeitet werden, es können aber auch Mischungen von feinteiligen Metallseifenpartikeln und Copolymerpartikeln vorliegen. Prinzipiell ist diese Vorgehensweise in EP1424354 beschrieben.

Die Metallseifen werden in Mengen von 0,01 bis 30 Gew.-%, vorzugsweise 0,5 bis 15 Gew.-%, bezogen auf die Summe der im Pulver vorhandenen Copolymere, eingesetzt. Bevorzugt wurden als Metallseifen die Natrium- oder Calciumsalze der zugrunde liegenden Alkanmonocarbonsäuren oder Dimersäuren eingesetzt. Beispiele für kommerziell verfügbare Produkte sind Licomont NaV 101 oder Licomont CaV 102 der Firma Clariant.

Zur Verbesserung der Verarbeitungsfähigkeit oder zur weiteren Modifikation des Copolymerpulvers können diesem anorganische Fremdpigmente, wie z. B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren, sowie Füllstoffpartikel zugegeben werden. Vorzugsweise wird, bezogen auf das Gesamtgewicht an Copolymeren im Copolymerpulver, so viel dieser Stoffe den Copolymeren zugegeben, dass die für das erfindungsgemäße Copolymerpulver angegebenen Konzentrationen für Füll- und/oder Hilfsstoffe eingehalten werden.

Gegenstand der vorliegenden Erfindung sind Verfahren zur Herstellung von Formkörpern durch schichtweise arbeitende Verfahren, bei denen selektiv Bereiche der jeweiligen Schicht aufgeschmolzen werden, bei denen ein spezielle Copolyamide aufweisendes Pulver, welches dadurch gekennzeichnet ist, dass es unter Verwendung der Monomerbausteine
➢ Laurinlactam oder ω-Aminoundecansäure, und entweder
➢ Dodekandisäure oder Sebazinsäure und entweder
➢ Dekandiamin oder Dodekandiamin
hergestellt wurde.

Bevorzugt wird als Monomerbaustein für die Copolyamidkomponente in der erfindungsgemäßen Verwendung 50 bis 98 Teile Laurinlactam oder ω-Aminoundecansäure eingesetzt, besonders bevorzugt 75 bis 98 Teile, und ganz besonders bevorzugt 85 bis 98 Teile.

Bevorzugt werden die Monomerbausteine Disäure und Diamin in der Copolyamidkomponente zu gleichen Teilen eingesetzt. Insgesamt beträgt der Anteil der beiden letztgenannten Monomerbausteinen zusammen zwischen 2 und 50 Teilen der Copolyamidkomponente der Pulverkomposition.

Die Energie wird durch elektromagnetische Strahlung eingebracht, und die Selektivität wird beispielsweise durch Masken, Auftragung von Inhibitoren, Absorbern, Suszeptoren oder aber durch eine Fokussierung der Strahlung, beispielsweise durch Laser, eingebracht. Die elektromagnetische Strahlung umfasst den Bereich von 100 nm bis 10 cm, bevorzugt zwischen 400 nm bis 10 600 nm oder zwischen 800 und 1 060 nm. Die Quelle der Strahlung kann beispielsweise ein Mikrowellengenerator, ein geeigneter Laser, ein Heizstrahler oder eine Lampe sein, aber auch Kombinationen davon. Nach dem Abkühlen aller Schichten kann der erfindungsgemäße Formkörper entnommen werden.

Die nachfolgenden Beispiele für solche Verfahren dienen der Erläuterung, ohne die Erfindung darauf beschränken zu wollen.

Die Lasersinterverfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinander folgende Versinterung von Schichten von Polymerpartikeln werden dreidimensionale Objekte hergestellt. Einzelheiten zum Verfahren des selektiven Laser-Sinterns sind z. B. den Schriften US 6 136 948 und WO 96/06881 zu entnehmen.

Andere gut geeignete Verfahren sind das SIV-Verfahren, wie es in WO 01/38061 beschrieben wird, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Die Formkörper, die durch das erfindungsgemäße schichtweise arbeitende Verfahren, bei dem selektiv Bereiche aufgeschmolzen werden, hergestellt werden, zeichnen sich dadurch aus, dass sie zumindest ein spezielles Copolyamid, welches dadurch gekennzeichnet ist, dass es unter Verwendung der Monomerbausteine
➢ Laurinlactam oder ω-Aminoundecansäure, und entweder
➢ Dodekandisäure oder Sebazinsäure und entweder
➢ Dekandiamin oder Dodekandiamin
hergestellt wurde, aufweisen.

Bevorzugt wird als Monomerbaustein für die Copolyamidkomponente in der erfindungsgemäßen Verwendung 50 bis 98 Teile Laurinlactam oder ω-Aminoundecansäure eingesetzt, besonders bevorzugt 75 bis 98 Teile, und ganz besonders bevorzugt 85 bis 98 Teile.

Bevorzugt werden die Monomerbausteine Disäure und Diamin in der Copolyamidkomponente zu gleichen Teilen eingesetzt. Insgesamt beträgt der Anteil der beiden letztgenannten Monomerbausteinen zusammen zwischen 2 und 50 Teilen der Copolyamidkomponente der Pulverkomposition.

Die Formkörper können außerdem Füllstoffe und/oder Hilfsstoffe (hier gelten die Angaben wie für das Copolymerpulver), wie z. B. thermische Stabilisatoren, wie z. B. sterisch gehinderte Phenolderivate, aufweisen. Füllstoffe können z. B. Glas-, Keramikpartikel und auch Metallpartikel, wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, besonders bevorzugt von 0,001 bis 2 Gew.-% und ganz besonders bevorzugt von 0,05 bis 1 Gew.-% solcher Hilfsstoffe, bezogen auf die Summe der vorhandenen Copolymere, auf. Ebenso bevorzugt weisen erfindungsgemäße Formkörper weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe, bezogen auf die Summe der vorhandenen Copolymere, auf.

Anwendungsgebiete für diese Formkörper sind sowohl im Rapid Prototyping als auch im Rapid Manufacturing zu sehen. Mit letzterem sind durchaus Kleinserien gemeint, also die Herstellung von mehr als einem gleichen Teil, bei dem aber die Produktion mittels eines Spritzgießwerkzeugs nicht wirtschaftlich ist. Beispiele hierfür sind Teile für hochwertige PKW, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in die die erfindungsgemäßen Teile gehen, können die Luft- und Raumfahrtindustrie sein, die Medizintechnik, der Maschinenbau, der Automobilbau, die Sportindustrie, die Haushaltswarenindustrie, Elektroindustrie und Lifestyle.

Die folgenden Beispiele sollen das Copolyamidpulver sowie dessen erfindungsgemäße Verwendung beschreiben, ohne die Erfindung auf die Beispiele einzuschränken.

Die Messwerte der Laserbeugung wurden mit dem Malvern Mastersizer S, Ver. 2.18, erhalten. Die Schüttdichte wurde mit einer Apparatur gemäß DIN 53 466 ermittelt. Die BET-Oberfläche wird durch Gasadsorption nach dem Prinzip von Brunauer, Emmet und Teller ermittelt; die herangezogene Norm ist die DIN ISO 9277.

### Beispiele

### Herstellung der Granulate

### Beispiel 1: Polyamid 12-Granulat, geregelt

In einem 2-1-Rührautoklaven aus V4A-Stahl wurden 1 000 g Laurinlactam, 10,5 g 1,12 Dodecandisäure 445 g Wasser und 0,1 g 50-%ige wässrige hypophosphorige Säure auf 280 °C unter Eigendruck (ca. 22 bar) erhitzt und nach 5 Stunden innerhalb 3 Stunden auf Atmosphärendruck entspannt. Man leitete noch 2 Stunden Stickstoff über die Schmelze. Das Reaktionsprodukt wurde als Strang ausgetragen, granuliert und bei 70 °C getrocknet.

| | |
|---|---|
| Relative Lösungsviskosität: | 1,62 |
| Extraktgehalt: | 1,26 Gew.-% |
| Schmelzpunkt (DSC): | 177 °C |
| Schmelzenthalpie: | 77 J/g |
| COOH: | 119 mmol/kg |
| NH₂: | 6 mmol/kg |

### Beispiel 2: Polyamid 12-Granulat, ungeregelt

Beispiel 1 wird ohne Zusatz von Dodecandisäure wiederholt. Die Entspannung wird hier nur bis zu einem Restdruck von 2,7 bar durchgeführt, anschließend lässt man die Schmelze 1 Stunde unter diesem Druck equilibireren. Das Reaktionsprodukt wird als Strang ausgetragen und granuliert.

| | |
|---|---|
| Relative Lösungsviskosität: | 1,62 |
| Extraktgehalt: | 1,05 Gew.-% |
| Schmelzpunkt (DSC): | 178 °C |
| Schmelzenthalpie: | 74 J/g |
| COOH: | 72 mmol/kg |
| NH₂: | 65 mmol/kg |

### Beispiel 3: Copolyamid 12/1212-Granulat, (95:5)

Beispiel 1 wird mit folgenden Einsatzstoffen wiederholt:

| | |
|---|---|
| Laurinlactam | 851 g |
| Dodecandiamin | 22,9g |
| Dodecandisäure | 26,1g |

Kennwerte des Austrages:

| | |
|---|---|
| Relative Lösungsviskosität: | 1,77 |
| Extraktgehalt: | 1,25 Gew.-% |
| Schmelzpunkt (DSC): | 174 °C |
| Schmelzenthalpie: | 69 J/g |
| COOH: | 84 mmol/kg |
| NH₂: | 31 mmol/kg |

### Beispiel 4: Copolyamid 12/1212-Granulat, (90:10)

Beispiel 1 wird mit folgenden Einsatzstoffen wiederholt:

| | |
|---|---|
| Laurinlactam | 803g |
| Dodecandiamin | 45,6g |
| Dodecandisäure | 52,1 g |

Kennwerte des Austrages:

| | |
|---|---|
| Relative Lösungsviskosität: | 1,84 |
| Extraktgehalt: | 1,18 Gew.-% |
| Schmelzpunkt (DSC): | 172 °C |
| Schmelzenthalpie: | 65 J/g |
| COOH: | 73 mmol/kg |
| NH₂: | 29 mmol/kg |

### Beispiel 5: Copolyamid 12/1212-Granulat, (80:20)

Beispiel 1 wird mit folgenden Einsatzstoffen wiederholt:

| | | | |
|---|---|---|---|
| Laurinlactam | | | 707g |
| Dodecandiamin | | | 90,4g |
| Dodecandisäure | | | 103,2g |
| Kennwerte des Austrages: | | | |
| Relative Lösungsviskosität: | 1,74 | | |
| Extraktgehalt: | 1,43 | Gew.-% | |
| Schmelzpunkt (DSC): | 168 | °C | |
| Schmelzenthalpie: | 71 | J/g | |
| COOH: | 104 | mmol/kg | |
| NH₂: | 36 | mmol/kg | |

### Beispiel 6: Copolyamid 12/1012-Granulat, (90:10)

Beispiel 1 wird mit folgenden Einsatzstoffen wiederholt:

| | |
|---|---|
| Laurinlactam | 808g |
| Decandiamin | 39,5g |
| Dodecandisäure | 52,4g |

Kennwerte des Austrages:

| | | |
|---|---|---|
| Relative Lösungsviskosität: | 1,58 | |
| Extraktgehalt: | 1,21 | Gew.-% |
| Schmelzpunkt (DSC): | 173 | °C |
| Schmelzenthalpie: | 66 | J/g |
| COOH: | 9 | mmol/kg |
| NH₂: | 143 | mmol/kg |

### Beispiel 7: Copolyamid 12/1012-Granulat, (95:5)

Beispiel 1 wird mit folgenden Einsatzstoffen wiederholt:

| | |
|---|---|
| Laurinlactam | 854g |
| Decandiamin | 19,8g |
| Dodecandisäure | 26,2g |

Kennwerte des Austrages:

| | | |
|---|---|---|
| Relative Lösungsviskosität: | 1,66 | |
| Extraktgehalt: | 1,19 | Gew.-% |
| Schmelzpunkt (DSC): | 174 | °C |
| Schmelzenthalpie: | 66 | J/g |
| COOH: | 9 | mmol/kg |
| NH₂: | 143 | mmol/kg |

### Herstellung der Fällpulver

### Beispiel 8: Homopolyamid 12, nicht erfindungsgemäß

400 g des Granulats aus Beispiel 1 wurden mit 2,6 I Ethanol 96-%ig, vergällt mit 2-Butanon in einem 5-I-Rührkessel, versehen mit Blattrührer, bei einer Rührerdrehzahl von 160 Upm bei 152 °C gelöst und 75 Minuten bei dieser Temperatur gehalten. Innerhalb von 40 Minuten kühlte man den Kesselinhalt auf 110 °C ab und hielt diese Temperatur 60 Minuten bei. Nach ca. 25 Minuten kam die Wärmeentwicklung, erkennbar an einer um 2K erhöhten Innentemperatur, zum Stillstand. Die Suspension wurde auf 75 °C abgekühlt und zur Trocknung (80 °C, 3 Stunden) in einen Schaufeltrockner überführt.

Man erhielt ein Pulver mit folgenden Eigenschaften:

| | |
|---|---|
| Schüttdichte: | 417 g/l |
| Korngrößenverteilung (d10/d50/d90): | 43 µm/66 µm/89 µm |
| Schmelztemperatur (DSC): | 186 °C |
| Schmelzenthalpie: | 119 J/g |
| BET-Oberfläche: | 6,8 m²/g |
| LL-Gehalt (GC): | 0,28 % |

### Beispiel 9: Homopolyamid 12, nicht erfindungsgemäß

400 g des Granulats aus Beispiel 2 wurden mit 2,6 I Ethanol 96-%ig, vergällt mit 2-Butanon in einem 5-I-Rührkessel, versehen mit Blattrührer, bei einer Rührerdrehzahl von 160 Upm bei 152 °C gelöst und 75 Minuten bei dieser Temperatur gehalten. Innerhalb von 40 Minuten kühlte man den Kesselinhalt auf 110 °C ab und hielt diese Temperatur 60 Minuten bei. Nach ca. 25 Minuten kam die Wärmeentwicklung, erkennbar an einer um 2K erhöhten Innentemperatur, zum Stillstand. Die Suspension wurde auf 75 °C abgekühlt und zur Trocknung (80 °C, 3 Stunden) in einen Schaufeltrockner überführt.

Man erhielt ein Pulver mit folgenden Eigenschaften:

| | |
|---|---|
| Schüttdichte: | 432 g/l |
| Korngrößenverteilung (d10/d50/d90): | 41 µm/69 µm/91 µm |
| Schmelztemperatur (DSC): | 187 °C |
| Schmelzenthalpie: | 114 J/g |
| BET-Oberfläche: | 7,1 m²/g |
| LL-Gehalt (GC): | 0,21 % |

### Beispiel 10: Copolyamid 12/1212 (95:5), erfindungsgemäß

400 g des Granulats aus Beispiel 3 wurden mit 2,6 I Ethanol 96-%ig, vergällt mit 2-Butanon in einem 5-I-Rührkessel, versehen mit Blattrührer, bei einer Rührerdrehzahl von 160 Upm bei 145 °C gelöst und 75 Minuten bei dieser Temperatur gehalten. Innerhalb von 40 Minuten kühlte man den Kesselinhalt auf 107 °C ab und hielt diese Temperatur 60 Minuten bei. Nach ca. 25 Minuten kam die Wärmeentwicklung, erkennbar an einer um 2K erhöhten Innentemperatur, zum Stillstand. Die Suspension wurde auf 75 °C abgekühlt und zur Trocknung (80 °C, 3 Stunden) in einen Schaufeltrockner überführt.

Man erhielt ein Pulver mit folgenden Eigenschaften:

| | |
|---|---|
| Schüttdichte: | 417 g/l |
| Korngrößenverteilung (d10/d50/d90): | 49 µm/75 µm/113 µm |
| Schmelztemperatur (DSC): | 181 °C |
| Schmelzenthalpie: | 113 J/g |
| BET-Oberfläche: | 3,9 m²/g |
| LL-Gehalt (GC): | 0,26 % |

### Beispiel 11: Copolyamid 12/1212 (90:10), erfindungsgemäß

400 g des Granulats aus Beispiel 4 wurden mit 2,6 I Ethanol 96-%ig, vergällt mit 2-Butanon in einem 5-I-Rührkessel, versehen mit Blattrührer, bei einer Rührerdrehzahl von 160 Upm bei 145 °C gelöst und 75 Minuten bei dieser Temperatur gehalten. Innerhalb von 40 Minuten kühlte man den Kesselinhalt auf 103 °C ab und hielt diese Temperatur 60 Minuten bei. Nach ca. 25 Minuten kam die Wärmeentwicklung, erkennbar an einer um 2K erhöhten Innentemperatur, zum Stillstand. Die Suspension wurde auf 75 °C abgekühlt und zur Trocknung (80 °C, 3 Stunden) in einen Schaufeltrockner überführt.

Man erhielt ein Pulver mit folgenden Eigenschaften:

| | |
|---|---|
| Schüttdichte: | 426 g/l |
| Korngrößenverteilung (d10/d50/d90): | 41 µm/63 µm/86 µm |
| Schmelztemperatur (DSC): | 178 °C |
| Schmelzenthalpie: | 104 J/g |
| BET-Oberfläche: | 3,4 m²/g |
| LL-Gehalt (GC): | 0,23 % |

### Beispiel 12: Copolyamid 12/1212 (80:20), erfindungsgemäß

400 g des Granulats aus Beispiel 5 wurden mit 2,6 I Ethanol 96-%ig, vergällt mit 2-Butanon in einem 5-I-Rührkessel, versehen mit Blattrührer, bei einer Rührerdrehzahl von 160 Upm bei 145 °C gelöst und 75 Minuten bei dieser Temperatur gehalten. Innerhalb von 40 Minuten kühlte man den Kesselinhalt auf 95 °C ab und hielt diese Temperatur 60 Minuten bei. Nach ca. 25 Minuten kam die Wärmeentwicklung, erkennbar an einer um 2K erhöhten Innentemperatur, zum Stillstand. Die Suspension wurde auf 75 °C abgekühlt und zur Trocknung (80°C, 3 Stunden) in einen Schaufeltrockner überführt.

Man erhielt ein Pulver mit folgenden Eigenschaften:

| | |
|---|---|
| Schüttdichte: | 426 g/l |
| Korngrößenverteilung (d10/d50/d90): | 52 µm/100 µm/136 µm |
| Schmelztemperatur (DSC): | 169 °C |
| Schmelzenthalpie: | 100 J/g |
| BET-Oberfläche: | 1,6 m²/g |
| LL-Gehalt (GC): | 0,21 % |

### Beispiel 13: Copolyamid 12/1012 (90:10), erfindungsgemäß

400 g des Granulats aus Beispiel 6 wurden mit 2,6 I Ethanol 96-%ig, vergällt mit 2-Butanon in einem 5-I-Rührkessel, versehen mit Blattrührer, bei einer Rührerdrehzahl von 160 Upm bei 145 °C gelöst und 75 Minuten bei dieser Temperatur gehalten. Innerhalb von 40 Minuten kühlte man den Kesselinhalt auf 97 °C ab und hielt diese Temperatur 60 Minuten bei. Nach ca. 25 Minuten kam die Wärmeentwicklung, erkennbar an einer um 2K erhöhten Innentemperatur, zum Stillstand. Die Suspension wurde auf 75 °C abgekühlt und zur Trocknung (80 °C, 3 Stunden) in einen Schaufeltrockner überführt.

Man erhielt ein Pulver mit folgenden Eigenschaften:

| | |
|---|---|
| Schüttdichte: | 440 g/l |
| Korngrößenverteilung (d10/d50/d90): | 33 µm/52 µm/77 µm |
| Schmelztemperatur (DSC): | 178 °C |
| Schmelzenthalpie: | 108 J/g |
| BET-Oberfläche: | 2,4 m²/g |
| LL-Gehalt (GC): | 0,24 % |

### Beispiel 14: Copolyamid 12/1012 (95:5), erfindungsgemäß

400 g des Granulats aus Beispiel 7 wurden mit 2,6 I Ethanol 96-%ig, vergällt mit 2-Butanon in einem 5-I-Rührkessel, versehen mit Blattrührer, bei einer Rührerdrehzahl von 160 Upm bei 145 °C gelöst und 75 Minuten bei dieser Temperatur gehalten. Innerhalb von 40 Minuten kühlte man den Kesselinhalt auf 99 °C ab und hielt diese Temperatur 60 Minuten bei. Nach ca. 25 Minuten kam die Wärmeentwicklung, erkennbar an einer um 2K erhöhten Innentemperatur, zum Stillstand. Die Suspension wurde auf 75 °C abgekühlt und zur Trocknung (80 °C, 3 Stunden) in einen Schaufeltrockner überführt.

Man erhielt ein Pulver mit folgenden Eigenschaften:

| | |
|---|---|
| Schüttdichte: | 445 g/l |
| Korngrößenverteilung (d10/d50/d90): | 34 µm/59 µm/94 µm |
| Schmelztemperatur (DSC): | 182 °C |
| Schmelzenthalpie: | 118 J/g |
| BET-Oberfläche: | 3,2 m²/g |
| LL-Gehalt (GC): | 0,26 % |

Die erfindungsgemäßen Pulver unterscheiden sich in den beschriebenen Merkmalen Zusammensetzung, Schmelzenthalpie, und BET-Oberfläche von den Vergleichsbeispielen.

### Weiterverarbeitung und Test

Die Pulver aus den Beispielen wurden auf einer Laser-Sinter-Maschine zu Mehrzweckstäben nach ISO 3167 verbaut. An letzteren Bauteilen wurden mechanische Werte mittels Zugversuch nach EN ISO 527 ermittelt (Tabelle 1). Die Herstellung erfolgte jeweils auf einer Laser-Sinter-Maschine EOSINT P380 der Firma EOS GmbH. Die Schichtdicke betrug 0,15 mm. Die Dichte wurde nach einem vereinfachten internen Verfahren ermittelt. Dazu werden die hergestellten Zugstäbe nach ISO 3167 (multi purpose test specimen) vermessen und daraus das Volumen berechnet, das Gewicht der Zugstäbe bestimmt, und aus Volumen und Gewicht die Dichte berechnet. Der Schwund wurde durch die Differenz zwischen Soll- und Istmaßen des Formkörpers ermittelt. Die Bandbreite für die Verarbeitungstemperatur wurde bestimmt, in dem die Temperaturen in der Baukammer herangezogen wurden, in dem für die untere mögliche Bautemperatur gerade eben kein Verzug der bereits aufgeschmolzenen Bereiche zu erkennen war, für die obere Grenze der Verarbeitungstemperatur die Temperatur, bei der gerade noch keine Hautbildung auf der Pulveroberfläche zu erkennen war. Beispielhaft wurden diese Untersuchungen in einer Lasersintermaschine EOSINT P380 der Fa. EOS GmbH durchgeführt. Die Pulver wurden sowohl ohne Rieselhilfe als auch mit Zugabe von 0,1 % Aerosil 200 auf der Lasersintermaschine verarbeitet.

**Tabelle 1: Ergebnisse der mechanischen Tests an den Formkörpern gemäß der Beispiele**

| **Beispiel** | **Verarbeitungs temperatur [°C]** | **Elastizitäts modul [N/mm²]** | **Reiß dehnung [%]** | **Dichte [g/l]** | **Schwund [%]** |
|---|---|---|---|---|---|
| Beispiel 8 (nicht erfindungsgemäß) | 180-184 | 1700 | 17 | 0,95 | 3 |
| Beispiel 14 | 170-180 | 1750 | 14 | 0,95 | 2,8 |
| Beispiel 13 | 172-181 | 1600 | 18 | 0,95 | 2,8 |

Das Verarbeitungsfenster des erfindungsgemäßen Materials ist deutlich größer als des nicht erfindungsgemäßen Beispiels 1. Ein größeres Verarbeitungsfenster erhöht die Prozesssicherheit. Zudem bedingt ein größeres Verarbeitungsfenster in Verbindung mit einer etwas geringeren Schwindung ein Vorteil bezüglich einer geringeren Verzugsneigung im Vergleich zu dem nicht erfindungsgemäßen Vergleichsmaterial. Die mechanischen Eigenschaften der Bauteile sind für den Einsatz im Rapid Prototyping sehr gut geeignet. Die Teile zeigen eine gute weiße Eigenfarbe.

## Patentansprüche

1. Schichtweise arbeitendes Verfahren zur Herstellung von dreidimensionalen Bauteilen unter Verwendung von Copolyamidpulver, bei dem selektiv Bereiche der jeweiligen Pulverschicht durch den Eintrag elektromagnetischer Energie aufgeschmolzen werden,
**dadurch gekennzeichnet,**
**dass** das Pulver unter Verwendung der Monomerbausteine
➢ Laurinlactam oder ω-Aminoundecansäure, und entweder
➢ Dodekandisäure oder Sebazinsäure und entweder
➢ Dekandiamin oder Dodekandiamin
hergestellt wurde.

2. Verfahren nach Anspruch 1,
**dadurch gekennzeichnet,**
**dass** das Pulver unter Verwendung von 50 bis 98 Teilen der Monomerbausteine Laurinlactam oder ω-Aminoundecansäure hergestellt wurde.

3. Verfahren nach Anspruch 1,
**dadurch gekennzeichnet,**
**dass** die Herstellung des Pulvers unter Verwendung der Monomerbausteine
➢ Dodekandisäure oder Sebazinsäure und entweder
➢ Dekandiamin oder Dodekandiamin
zu äquimolaren Anteilen erfolgte.

4. Verfahren nach zumindest einem der vorhergehenden Ansprüche,
**dadurch gekennzeichnet,**
**dass** die BET-Oberfläche des Pulvers, gemessen nach DIN ISO 9277, weniger als 8 m²/g beträgt.

5. Verfahren nach zumindest einem der vorhergehenden Ansprüche,
**dadurch gekennzeichnet,**
**dass** die Schmelzenthalpie des Pulvers mehr als 90 J/g beträgt.

6. Verfahren nach zumindest einem der vorhergehenden Ansprüche,
**dadurch gekennzeichnet,**
**dass** mittlere Korndurchmesser des Pulvers D50 zwischen 30 und 70 µm beträgt.

7. Verfahren nach zumindest einem der vorhergehenden Ansprüche,
**dadurch gekennzeichnet,**
**dass** die Lösungsviskosität des Copolyamids, gemessen nach DIN 53727, zwischen 1,4 und 2,3 beträgt

8. Verfahren nach zumindest einem der vorhergehenden Ansprüche,
**dadurch gekennzeichnet,**
**dass** die Schüttdichte des Pulvers, gemessen nach DIN 53466, zwischen 300 und 600 g/l beträgt

9. Verfahren nach zumindest einem der vorhergehenden Ansprüche,
**dadurch gekennzeichnet,**
**dass** bei der Verwendung von Laurinlactam der Schmelzpunkt des Copolyamidpulvers zwischen 170 und 184 °C liegt.

10. Verfahren nach zumindest einem der vorhergehenden Ansprüche,
**dadurch gekennzeichnet,**
**dass** bei der Verwendung von Aminoundecansäure der Schmelzpunkt des Copolyamidpulvers zwischen 180 und 193 °C liegt.

11. Verfahren nach zumindest einem der vorhergehenden Ansprüche,
**dadurch gekennzeichnet,**
**dass** der Schmelzpunkt des Copolyamidpulvers zwischen 170 und 184 °C beträgt, bei Einsatz von Laurinlactam, und gleichzeitig die BET-Oberfläche weniger als 8 m²/g und die Schmelzenthalpie mehr als 88 J/g beträgt.

12. Verfahren nach zumindest einem der vorhergehenden Ansprüche,
**dadurch gekennzeichnet,**
**dass** der Schmelzpunkt des Copolyamidpulvers zwischen 180 und 193 °C beträgt, bei Einsatz von ω-Aminoundecansäure, und gleichzeitig die BET-Oberfläche weniger als 8 m²/g und die Schmelzenthalpie mehr als 88 J/g beträgt.

13. Verfahren nach Anspruch 1,
**dadurch gekennzeichnet,**
**dass** das eingesetzte Copolyamid durch einen Fällprozess erhalten wird, indem es vor der Anwendung in einem geeigneten Lösemittel unter Einwirkung von Temperatur und Druck gelöst und anschließend durch Abkühlen der Lösung ausgefällt wird.

14. Verfahren nach zumindest einem der vorhergehenden Ansprüche,
**dadurch gekennzeichnet,**
**dass** das eingesetzte Copolyamidpulver 0,001 bis 2 Gew.%, bezogen auf die Copolyamide, Hilfsstoffe enthält.

15. Verfahren nach Anspruch 14,
**dadurch gekennzeichnet,**
**dass** als Hilfsstoffe thermische Stabilisatoren und/oder Rieselhilfsmittel eingesetzt werden.

16. Verfahren nach zumindest einem der vorhergehenden Ansprüche,
**dadurch gekennzeichnet,**
**dass** das eingesetzte Copolyamidpulver 0,001 bis 70 Gew.%, bezogen auf die Copolyamide, Füllstoffe enthält.

17. Verfahren nach Anspruch 16,
**dadurch gekennzeichnet,**
**dass** als Füllstoffe Glas-, Metall- oder Keramikpartikel eingesetzt werden.

18. Verfahren nach zumindest einem der vorhergehenden Ansprüche,
**dadurch gekennzeichnet,**
**dass** das eingesetzte Copolyamidpulver 0,01 bis 30 Gew.%, bezogen auf die Copolyamide, Metallseifen enthält.

## Claims

1. Layer-by-layer process for production of three-dimensional components, using copolyamide powder, by selective melting of regions of the respective powder layer through introduction of electromagnetic energy,
**characterized in that**
the powder was produced using the following monomer units:
➢ laurolactam or ω-aminoundecanoic acid, and either
➢ dodecanedioic acid or sebacic acid, and either
➢ decanediamine or dodecanediamine.

2. Process according to Claim 1,
**characterized in that**
the powder was produced using from 50 to 98 parts of the following monomer units: laurolactam or ω-aminoundecanoic acid.

3. Process according to Claim 1,
**characterized in that**
the production of the powder used the following monomer units:
➢ dodecanedioic acid or sebacic acid and either
➢ decanediamine or dodecanediamine
in equimolar proportions.

4. Process according to at least one of the preceding claims,
**characterized in that**
the BET surface area of the powder, measured according to DIN ISO 9277, is less than 8 m²/g.

5. Process according to at least one of the preceding claims,
**characterized in that**
the enthalpy of fusion of the powder is more than 90 J/g.

6. Process according to at least one of the preceding claims,
**characterized in that**
the median grain diameter of the powder D50 is from 30 to 70 µm.

7. Process according to at least one of the preceding claims,
**characterized in that**
the solution viscosity of the copolyamide, measured according to DIN 53727, is from 1.4 to 2.3.

8. Process according to at least one of the preceding claims,
**characterized in that**
the bulk density of the powder, measured according to DIN 53466, is from 300 to 600 g/l.

9. Process according to at least one of the preceding claims,
**characterized in that**
using laurolactam, the melting point of the copolyamide powder is from 170 to 184°C.

10. Process according to at least one of the preceding claims,
**characterized in that**
using aminoundecanoic acid, the melting point of the copolyamide powder is from 180 to 193°C.

11. Process according to at least one of the preceding claims,
**characterized in that**,
using laurolactam, the melting point of the copolyamide powder is from 170 to 184°C, and simultaneously the BET surface area is less than 8 m²/g and the enthalpy of fusion is more than 88 J/g.

12. Process according to at least one of the preceding claims,
**characterized in that**,
using ω-aminoundecanoic acid, the melting point of the copolyamide powder is from 180 to 193°C, and simultaneously the BET surface area is less than 8 m²/g and the enthalpy of fusion is more than 88 J/g.

13. Process according to Claim 1,
**characterized in that**
the copolyamide used is obtained by a precipitation process in which, prior to use, it is dissolved in a suitable solvent with exposure to heat and pressure and is then precipitated by cooling the solution.

14. Process according to at least one of the preceding claims,
**characterized in that**
the copolyamide powder used comprises from 0.001 to 2% by weight, based on the copolyamides, of auxiliaries.

15. Process according to Claim 14,
**characterized in that**
auxiliaries used comprise heat stabilizers and/or powder-flow aids.

16. Process according to at least one of the preceding claims,
**characterized in that**
the copolyamide powder used comprises from 0.001 to 70% by weight, based on the copolyamides, of fillers.

17. Process according to Claim 16,
**characterized in that**
fillers used comprise glass particles, metal particles or ceramic particles.

18. Process according to at least one of the preceding claims,
**characterized in that**
the copolyamide powder used comprises from 0.01 to 30% by weight, based on the copolyamides, of metal soaps.

## Revendications

1. Procédé fonctionnant par couches, pour la production de pièces de construction tridimensionnelles avec utilisation de poudre de copolyamides, dans lequel on fait fondre sélectivement des zones de la couche de poudre respective par l'apport d'énergie électromagnétique, **caractérisé en ce que** la poudre a été préparée avec utilisation des composants monomères
➢ lauryllactame ou acide ω-amino-undécanoïque, et soit
➢ acide dodécanedioïque, soit acide sébacique et soit
➢ décanediamine, soit dodécanediamine.

2. Procédé selon la revendication 1, **caractérisé en ce que** la poudre a été préparée avec utilisation de 50 à 98 parties des composants monomères lauryllactame ou acide ω-amino-undécanoique.

3. Procédé selon la revendication 1, **caractérisé en ce que** la préparation de la poudre a été effectuée avec utilisation des composants monomères
➢ acide dodécanedioïque ou acide sébacique et soit
➢ décanediamine, soit dodécanediamine
en proportions équimolaires.

4. Procédé selon au moins l'une des revendications précédentes, **caractérisé en ce que** la surface BET de la poudre, mesurée selon DIN ISO 9277, est inférieure à 8 m²/g.

5. Procédé selon au moins l'une des revendications précédentes, **caractérisé en ce que** l'enthalpie de fusion de la poudre est de plus de 90 J/g.

6. Procédé selon au moins l'une des revendications précédentes, **caractérisé en ce que** le diamètre moyen de grain de la poudre D50 est compris entre 30 et 70 µm.

7. Procédé selon au moins l'une des revendications précédentes, **caractérisé en ce que** la viscosité en solution du copolyamide, mesurée selon DIN 53727, est comprise entre 1,4 et 2,3.

8. Procédé selon au moins l'une des revendications précédentes, **caractérisé en ce que** la densité apparente de la poudre, mesurée selon DIN 53466, est comprise entre 300 et 600 g/l.

9. Procédé selon au moins l'une des revendications précédentes, **caractérisé en ce que** dans le cas de l'utilisation de lauryllactame le point de fusion de la poudre de copolyamides est compris entre 170 et 184 °C.

10. Procédé selon au moins l'une des revendications précédentes, **caractérisé en ce que** dans le cas de l'utilisation d'acide amino-undécanoïque le point de fusion de la poudre de copolyamides est compris entre 180 et 193 °C.

11. Procédé selon au moins l'une des revendications précédentes, **caractérisé en ce que** le point de fusion de la poudre de copolyamides est compris entre 170 et 184 °C dans le cas d'utilisation de lauryllactame, et en même temps la surface BET est inférieure à 8 m²/g et l'enthalpie de fusion est de plus de 88 J/g.

12. Procédé selon au moins l'une des revendications précédentes, **caractérisé en ce que** le point de fusion de la poudre de copolyamides est compris entre 180 et 193 °C dans le cas d'utilisation d'acide ω-amino-undécanoïque, et en même temps la surface BET est inférieure à 8 m²/g et l'enthalpie de fusion est de plus de 88 J/g.

13. Procédé selon la revendication 1, **caractérisé en ce qu'**on obtient le copolyamide par un procédé de précipitation, en le dissolvant avant l'emploi dans un solvant approprié, sous l'effet de température et de pression, et ensuite en le faisant précipiter par refroidissement de la solution.

14. Procédé selon au moins l'une des revendications précédentes, **caractérisé en ce que** la poudre de copolyamides utilisée contient de 0,001 à 2 % en poids d'adjuvants, par rapport aux copolyamides.

15. Procédé selon la revendication 14, **caractérisé en ce qu'**on utilise comme adjuvants des stabilisants thermiques et/ou des adjuvants d'écoulement.

16. Procédé selon au moins l'une des revendications précédentes, **caractérisé en ce que** la poudre de copolyamides utilisée contient de 0,001 à 70 % en poids de charges, par rapport aux copolyamides.

17. Procédé selon la revendication 16, **caractérisé en ce qu'**on utilise comme charges des particules de verre, métal ou céramique.

18. Procédé selon au moins l'une des revendications précédentes, **caractérisé en ce que** la poudre de copolyamides utilisée contient de 0,01 à 30 % en poids de savons métalliques, par rapport aux copolyamides.
